# EUROPÄISCHE PATENTSCHRIFT

(11) **EP 2 677 611 B1**
(45) Veröffentlichungstag und Bekanntmachung des Hinweises auf die Patenterteilung: **11.02.2015**
(21) Anmeldenummer: 13172881.8
(22) Anmeldetag: 19.06.2013
(51) Int. Cl.: H02B 1/56, H02G 5/10, H01B 17/10, H01B 17/42, H01B 17/54

(54) **Wärmerohr**
Heat pipe
Tuyau de chauffage

(30) Priorität: 20.06.2012 DE 102012210427
(43) Veröffentlichungstag der Anmeldung: 25.12.2013
(73) Patentinhaber: Schneider Electric Industries SAS, 92500 Rueil-Malmaison (FR)
(72) Erfinder: Summer, Raimund, 93186 Pettendorf (DE); Bedranowsky, Andreas, 93309 Kelheim (DE)
(74) Vertreter: Manitz, Finsterwald & Partner GbR

(56) Entgegenhaltungen:
- EP-A1- 1 657 731
- DE-A1-102009 023 866

## Beschreibung

Die vorliegende Erfindung betrifft ein Wärmerohr zum Übertragen von Wärmeenergie entlang einer Transportrichtung von einer Wärmequelle zu einer Wärmesenke, insbesondere zum Kühlen von auf Hochspannung liegenden stromtragenden Bauteilen in der Mittel- und Hochspannungstechnik, mit einem Verdampfer zum Verdampfen eines in dem Wärmerohr enthaltenen Arbeitsfluids, einem Kondensator zum Kondensieren des verdampften Arbeitsfluids, und einem Fluidtransportabschnitt, welcher den Verdampfer unter Ausbildung einer elektrischen Isolierstrecke mit dem Kondensator verbindet.

Beim Betrieb elektrischer Komponenten in der Mittel- und Hochspannungstechnik, wie z.B. Leistungsschalter oder Trennschalter, müssen beträchtliche Wärmemengen unter Überwindung einer Potentialdifferenz von einem stromführenden Leiter an die Umgebung abgeführt werden. Ein Wärmerohr der vorstehend genannten Art, dessen Verdampfer am stromführenden Leiter und dessen Kondensator z.B. an einem geerdeten Gehäuse vorgesehen ist, ermöglicht eine passive Kühlung des Leiters durch fortlaufendes Verdampfen und Kondensieren des Arbeitsfluids. Das kondensierte Arbeitsfluid wird hierbei vorzugsweise durch eine geeignete Anordnung des Wärmerohrs unter Ausnutzung der Schwerkraft oder mittels Kapillarwirkung wieder zu dem Verdampfer zurückgeführt, so dass ein geschlossener Kreislauf für das Arbeitsfluid entsteht. Im einfachsten Fall können der Verdampfer und der Kondensator als Aufnahmebehälter für das Arbeitsfluid ausgeführt sein.

Derartige Wärmerohre müssen nicht nur unerwünschte Entladungen innerhalb der elektrischen Isolierstrecke mit hoher Zuverlässigkeit verhindern, sondern auch relativ hohen mechanischen und thermischen Belastungen widerstehen. Es ist in der Praxis schwierig, die Isolierstrecke derart zu gestalten, dass alle Anforderungen erfüllt sind.

Es ist daher eine Aufgabe der Erfindung, ein Wärmerohr bereitzustellen, welches einen verbesserten Schutz gegenüber Entladungen bietet und die Überbrückung größerer Potentialdifferenzen und dadurch auch kleinere Baugrößen ermöglicht. EP-A1-1 657 731 offenbart den Stand der Technik.

Die Lösung der Aufgabe erfolgt durch ein Wärmerohr mit den Merkmalen des Anspruchs 1.

Erfindungsgemäß umfasst der Fluidtransportabschnitt zur Ausbildung der elektrischen Isolierstrecke wenigstens zwei elektrische Isolationskörper, welche in Bezug auf die Transportrichtung hintereinander angeordnet und durch ein elektrisch leitfähiges Element voneinander getrennt sind. Es kommt also nicht ein einzelner Isolator zur Anwendung, sondern eine Anordnung aus wenigstens zwei separaten Isolatoren. Durch die Abfolge von Isolator und Leiter entlang der Isolierstrecke wird eine elektrische Kapazität zwischen den Verdampfer und den Kondensator eingefügt, welche eine gezielte Steuerung des elektrischen Feldes ermöglicht. Konkret können damit die elektrischen Feldstärken reduziert werden und somit die Widerstandsfähigkeit des Wärmerohrs gegenüber Entladungen oder Teilentladungen verbessert werden.

Vorzugsweise ist das elektrisch leitfähige Element flexibel und/oder elastisch. Hierdurch können thermische Ausdehnungen und Verformungen kompensiert werden, und zwar auch dann, wenn die Isolationskörper selbst starr ausgebildet sind. Insbesondere kann das elektrisch leitfähige Element aus elektrisch leitfähigen Werkstoffen oder nichtleitfähigen Werkstoffen mit leitfähiger Oberflächenbeschichtung oder auch feldabhängig nichtlinear leitfähigen Werkstoffen hergestellt sein. Als leitfähige Werkstoffe können z.B. Metalle, Metalloxide oder halbleitende Werkstoffe sowie nichtlinear leitfähige Werkstoffe wie zum Beispiel Siliciumcarbid verwendet werden. Zudem können nicht leitfähige Werkstoffe mit leitfähiger Oberflächenbeschichtung verwendet werden, zum Beispiel Silikonkautschuk oder andere Polymere mit durch Ruß oder Graphit leitfähig dotierter Polymerbeschichtung. Ein flexibles und/oder elastisches elektrisch leitfähiges Element erfüllt eine Doppelfunktion, indem es gleichzeitig zur Steuerung des elektrischen Feldes und zur Erhöhung der mechanischen Belastbarkeit des Wärmerohrs beiträgt.

Gemäß einer Ausführungsform der Erfindung weist das elektrisch leitfähige Element einen Feldsteuerungsabschnitt mit einer zur Homogenisierung eines in der elektrischen Isolierstrecke auftretenden elektrischen Feldes angepassten Formgebung auf. Mit anderen Worten kann ein Teil des Leiters zwischen den beiden Isolatoren eine Geometrie aufweisen, welche die Belastung durch das elektrische Feld und damit die Entladungssicherheit der Isolierstrecke günstig beeinflusst. Ausgeprägte lokale Erhöhungen der elektrischen Feldstärke können durch den Feldsteuerungsabschnitt vermieden werden.

Gemäß einer konkreten Ausgestaltung ist der Feldsteuerungsabschnitt torusförmig und steht gegenüber einer äußeren Mantelfläche der Isolationskörper vor. Hierdurch können Potentialsprünge, wie sie an einem bündigen oder kantenartigen Übergang von Leiter und Isolator auftreten, verhindert werden.

Weiterhin kann das elektrisch leitfähige Element einen hohlprofilartigen Querschnitt aufweisen. Der hohlprofilartige Querschnitt kann dem elektrisch leitfähigen Element eine besondere Flexibilität verleihen. Insbesondere kann ein hohlprofilartiger Leiter ähnlich wie eine Blattfeder wirken. Davon abgesehen kann ein hohlprofilartiger Leiter die Potentialverteilung innerhalb des Wärmerohrs günstig beeinflussen.

Gemäß einer weiteren Ausgestaltung der Erfindung weist das elektrisch leitfähige Element einen inneren, ringförmigen Basisabschnitt auf, an den sich ein äußerer, torusförmiger Feldsteuerungsabschnitt anschließt. Insbesondere kann ein derart gestalteter Leiter zwischen zwei hohlzylindrische Isolatoren eingefügt sein, wobei sich der torusförmige Feldsteuerungsabschnitt ausgehend von der äußeren Mantelfläche der Hohlzylinder radial nach außen erstreckt und für eine gleichmäßigere Potentialverteilung sorgt.

Eine Feldsteuerung kann nicht nur durch die Formgebung der elektrisch leitfähigen Elemente bewirkt werden, sondern alternativ oder zusätzlich auch durch einen am Wärmerohr vorgesehenen Isolierstoff, welcher mit die Isolationseigenschaften beeinflussenden Zusätzen versehen ist und daher eine gewisse Restleitfähigkeit aufweist. Solche Zusätze können beispielsweise Metalle, Metalloxide oder Mikrovaristoren sein. Insbesondere können als Zusätze Siliciumcarbid, Eisenoxid oder Zinkoxid vorgesehen sein. Vorzugsweise sind derartige Isolierstoffe an den Übergangsbereichen zwischen den Isolationskörpern und den elektrisch leitfähigen Elementen vorgesehen, z.B. auf die Außenfläche des Wärmerohrs aufgebracht.

Durch Zusätze wie vorstehend beschrieben kann dem betreffenden Isolierstoff eine elektrische Leitfähigkeit verliehen werden, die sich jedoch erst ab einer bestimmten elektrischen Feldstärke einstellt. Sobald also ein bestimmter Grenzwert des elektrischen Feldes überschritten wird, wird das isolierende Verhalten des Werkstoffes aufgehoben und das Material zeigt eine elektrische Leitfähigkeit. Die elektrische Leitfähigkeit kann durch Art und Menge des Zusatzwerkstoffes beeinflusst werden und dadurch an die jeweilige Anforderung angepasst werden. Ein Isolierstoff wie vorstehend beschrieben kann auch zusätzlich zu einem auf Formgebung beruhenden Feldsteuerungsabschnitt der elektrisch leitfähigen Elemente vorgesehen sein, um die Feldsteuerung noch feiner abzustimmen.

Es können auch mehrere Isolationskörper und mehrere elektrisch leitfähige Elemente abwechselnd hintereinander angeordnet sein. Mit anderen Worten kann die Isolierstrecke entlang der Transportrichtung in eine Vielzahl von Segmenten aus Isolator und Leiter unterteilt sein. Eine derartige Segmentierung entspricht einer Reihenschaltung von Kapazitäten. Dadurch kann die Potentialdifferenz zwischen der Wärmequelle und der Wärmesenke stufenweise abgebaut werden, wodurch eine besonders gleichmäßige Potentialverteilung entlang des Wärmerohres und somit eine geringere elektrische Feldstärke erreicht und die Entladungsgefahr in der Isolierstrecke weiter verringert werden kann.

Der Verdampfer und/oder der Kondensator kann durch einen napfartigen Behälter aus elektrisch leitfähigem Material gebildet sein, wobei der Behälter einen Feldsteuerungsabschnitt mit einer zur Homogenisierung eines in der elektrischen Isolierstrecke auftretenden elektrischen Feldes angepassten Formgebung aufweist. Insbesondere können also der Verdampfer und der Kondensator selbst durch elektrisch leitfähige Elemente gebildet sein, wodurch sich im einfachsten Fall das gesamte Wärmerohr aus einer Abfolge von elektrisch leitfähigen Elementen und Isolatoren zusammensetzt. Dies ermöglicht eine besonders einfache und kostengünstige Konstruktion. Außerdem ist es vorteilhaft, wenn sowohl die elektrisch leitfähigen Elemente zwischen den Isolatoren als auch der Verdampfer und der Kondensator zur Feld- oder Potentialsteuerung beitragen.

Die Erfindung betrifft auch elektrische Komponenten wie z.B. Leistungsschalter mit einem stromführenden Innenleiter und einem den Innenleiter gehäuseartig umgebenden Außenleiter, wobei zum Abführen von Wärme von dem Innenleiter ein Wärmerohr wie vorstehend beschrieben vorgesehen ist, und wobei der Verdampfer des Wärmerohrs in thermischem und elektrischem Kontakt mit dem Innenleiter steht und der Kondensator in thermischem und elektrischem Kontakt mit dem Außenleiter steht. Die während des Betriebs der elektrischen Komponenten am Innenleiter anfallende thermische Energie kann durch das Wärmerohr effektiv an das Schaltergehäuse oder an dessen Außenseite abgeführt werden.

Wenn die Isolationskörper des Wärmerohres eine im Vergleich zur Streukapazität von Innenleiter zu Außenleiter große Kapazität aufweisen, kann durch die Segmentierung eine kapazitive Steuerung erfolgen.

Durch ein Wärmerohr wie vorstehend beschrieben ist es möglich, elektrische Komponenten und Schaltgeräte mit deutlich höheren Bemessungsströmen als bei konventionellen Geräten ohne Wärmeleitrohr ohne Einsatz einer Zwangskühlung, d.h. rein passiv, zu kühlen.

Weiterbildungen der Erfindung sind auch in den abhängigen Ansprüchen, der Beschreibung sowie der beigefügten Zeichnung angegeben.

Die Erfindung wird nachfolgend beispielhaft unter Bezugnahme auf die Zeichnung beschrieben.
- Fig. 1: ist eine Schnittdarstellung eines Wärmerohrs gemäß einer ersten Ausführungsform der Erfindung, das in einem Schaltfeld montiert ist; und
- Fig. 2: ist eine Schnittdarstellung eines Teils eines Wärmerohrs gemäß einer zweiten Ausführungsform der Erfindung.

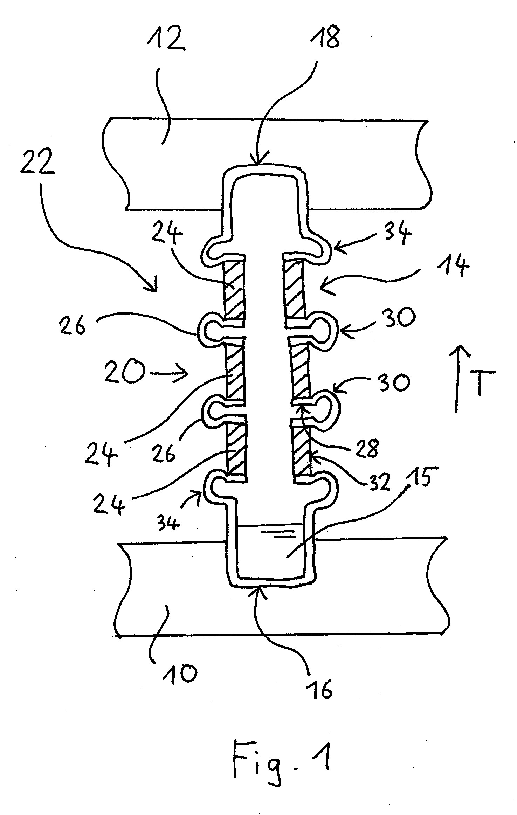

Ein in Fig. 1 lediglich teilweise dargestellter Leistungsschalter weist einen stromführenden Innenleiter 10 und einen den Innenleiter 10 gehäuseartig umgebenden Außenleiter 12 auf. Während des Betriebs des Leistungsschalters befindet sich der Innenleiter 10 auf Hochspannungspotential und stellt eine Wärmequelle dar, während sich der Außenleiter 12 auf Erdpotential befindet und eine Wärmesenke darstellt.

Zur passiven Kühlung des Leistungsschalters ist ein Wärmerohr 14 vorgesehen, welches in der Lage ist, während des Betriebs des Leistungsschalters thermische Energie entlang einer Transportrichtung T von dem Innenleiter 10 zu dem Außenleiter 12 zu übertragen. Zu diesem Zweck enthält das Wärmerohr 14 ein zweiphasiges Arbeitsfluid 15, welches an der Wärmequelle verdampft und an der Wärmesenke kondensiert. Im Einzelnen setzt sich das Wärmerohr 14 aus einem Verdampfer 16, einem Kondensator 18 sowie einem sich zwischen dem Verdampfer 16 und dem Kondensator 18 erstreckenden Fluidtransportabschnitt 20 auf. Der Verdampfer 16 steht in thermischem und elektrischem Kontakt mit dem Innenleiter 10, während der Kondensator 18 in thermischem und elektrischem Kontakt mit dem Außenleiter 12 steht. Im dargestellten Ausführungsbeispiel verläuft die Transportrichtung T entlang der Rohrlängsachse des Wärmerohrs 14.

Das Arbeitsfluid 15 weist eine flüssige und eine gasförmige Phase auf und ist elektrisch isolierend. Insbesondere kommt als Arbeitsfluid 15 ein Fluoroketon in Betracht. Die flüssige Phase des Arbeitsfluids 15 befindet sich aufgrund der Schwerkraft am unteren Ende des Wärmerohrs 14, und zwar in einem durch den Verdampfer 16 gebildeten napfartigen Behälter aus elektrisch leitfähigem Material. Durch die von dem Innenleiter 10 ausgehende Wärme wird die flüssige Phase des Arbeitsfluids 15 während des Betriebs des Leistungsschalters in dem Verdampfer 16 verdampft. Der Dampf gelangt in den Kondensator 18 am oberen Ende des Wärmerohrs 14, welcher ebenfalls durch einen napfartigen Behälter aus elektrisch leitfähigem Material gebildet ist. In dem Kondensator 18 kondensiert der Dampf, wobei die entstehende flüssige Phase aufgrund der Schwerkraft entgegen der Transportrichtung T zurück in den Verdampfer 16 fließt. Durch fortlaufendes Verdampfen und Kondensieren des Arbeitsfluids 15 kann so thermische Energie entlang der Transportrichtung T von dem Innenleiter 10 abgeführt und auf den Außenleiter 12 übertragen werden.

Da zwischen dem Innenleiter 10 und dem Außenleiter 12 eine beträchtliche Potentialdifferenz besteht, bildet der Fluidtransportabschnitt 20 eine elektrische Isolierstrecke 22 aus. Diese Isolierstrecke 22 beruht auf drei hohlzylindrischen Isolationskörpern 24, welche aus einem keramischen Werkstoff bestehen und im Wesentlichen starr sind. Die drei Isolationskörper 24 sind durch zwei elektrisch leitfähige, im Wesentlichen ringförmige Elemente 26 voneinander getrennt. In Bezug auf die Transportrichtung T sind die Isolationskörper 24 und die elektrisch leitfähigen Elemente 26 abwechselnd hintereinander angeordnet.

Die elektrisch leitfähigen Elemente 26 sind vorzugsweise aus Kupfer hergestellt und flexibel. Sie weisen einen hohlprofilartigen Querschnitt auf, wodurch die Flexibilität weiter gesteigert wird. Wie aus Fig. 1 hervorgeht, weist jedes der elektrisch leitfähigen Elemente 26 einen ringförmigen Basisabschnitt 28 auf, welcher zwischen den entsprechenden Isolationskörpem 24 angeordnet ist und mit diesen in Kontakt steht. Radial nach außen schließt sich an den ringförmigen Basisabschnitt 28 ein torusförmiger Feldsteuerungsabschnitt 30 an, welcher gegenüber einer äußeren Mantelfläche 32 der hohlzylindrischen Isolationskörper 24 vorsteht. Der torusförmige Feldsteuerungsabschnitt 30 dient der Beeinflussung der elektrischen Feldverteilung im Bereich der Isolierstrecke 22. Insbesondere werden durch den torusförmigen Feldsteuerungsabschnitt 30 lokale Erhöhungen des elektrischen Feldes bzw. des elektrischen Potentials am Übergang zwischen den Isolationskörpern 24 und den elektrisch leitfähigen Elementen 26 verringert. Auch am Verdampfer 16 und am Kondensator 18 sind jeweilige torusförmige Feldsteuerungsabschnitte 34 vorgesehen. Durch die Geometrie der Feldsteuerungsabschnitte 30, 34 können insbesondere Entladungen vermieden werden, welche z.B. aufgrund einer Felderhöhung am Tripelpunkt entstehen.

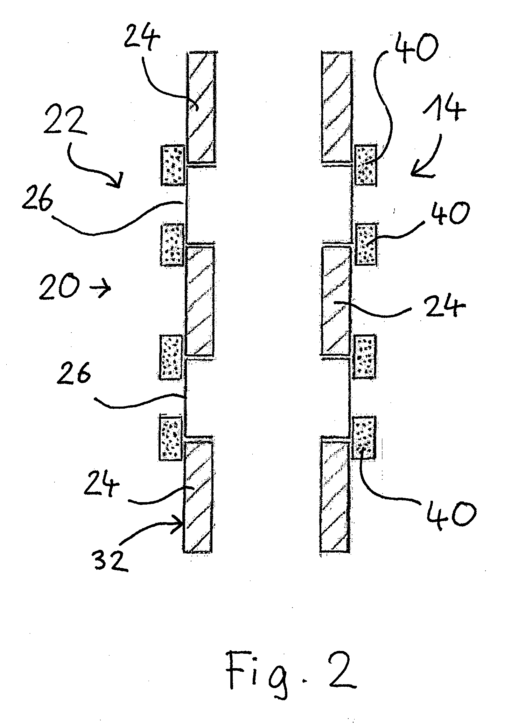

Bei der in Fig. 2 dargestellten Ausführungsform beruht die Isolierstrecke 22 ebenfalls auf drei hohlzylindrischen Isolationskörpern 24, welche durch zwei elektrisch leitfähige, im Wesentlichen ringförmige Elemente 26 voneinander getrennt sind. Zur aktiven Feldsteuerung sind hier jedoch Feldsteuerungskörper 40 vorgesehen. Diese Feldsteuerungskörper 40 sind aus einem elektrisch isolierenden Material hergestellt, welchem durch Beimischung geeigneter Zusätze eine feldabhängige elektrische Leitfähigkeit verliehen wurde. Wie aus Fig. 2 hervorgeht, sind die im Wesentlichen ringförmigen Feldsteuerungskörper 40 an den Übergangsstellen zwischen den Isolationskörpern 24 und den elektrisch leitfähigen Elementen 26 außen am Wärmeleitrohr 14 angeordnet.

Durch die Segmentierung der elektrischen Isolierstrecke 22 in mehrere durch leitfähige Elemente 26 voneinander getrennte Isolationskörper 24 entsprechen die hierdurch gebildeten Segmente in elektrischer Hinsicht einer Hintereinanderschaltung mehrerer Kapazitäten, welche mit einem stufenweisen Potentialabfall entlang der Isolierstrecke 22 einhergeht. Da für die isolierende Wirkung des Wärmerohrs 14 letztlich die Vermeidung von starken Potentialgradienten entscheidend ist, kann ein mit dem Wärmerohr 14 ausgestattetes Schaltfeld zum Tragen höherer Ströme ausgelegt sein, als dies ohne Verwendung von Wärmerohren möglich wäre. Durch die Segmentierung der elektrischen Isolierstrecke und den Einsatz von geeigneten Feldsteuerelementen können Wärmerohre entweder in Spannungssystemen mit höheren Bemessungswerten als bisher, z. B. in Generator-Leistungsschaltern bis 10 kV, eingesetzt werden oder die baulichen Abmessungen in bestehenden Systemen mit vorhandenen Bemessungsspannungen können erheblich kleiner gestaltet werden. Weiterhin können während des Betriebs unvermeidlich auftretende mechanische Auslenkungen des Innenleiters 10, des Außenleiters 12 und/oder des Wärmerohrs 14 durch die flexiblen Elemente 26 ausgeglichen werden, ohne dass das Integrieren eines separaten Faltenbalgs oder dergleichen in das Wärmerohr 14 erforderlich ist. Insgesamt ermöglicht die Erfindung somit ein zuverlässig isolierendes, flexibles und dabei einfach herzustellendes Wärmerohr, welches eine verbesserte Kühlung von Leistungsschaltern in der Mittel- und Hochspannungstechnik ermöglicht. Dadurch dass ein erfindungsgemäßes Wärmerohr bei gleicher Baugröße die Überbrückung größerer Potentialdifferenzen ermöglicht, ist bei gegebenen Potentialdifferenzen in bestehenden Anwendungen die Realisierung kleinerer Baugrößen möglich.

### Bezugszeichenliste

- 10: Innenleiter
- 12: Außenleiter
- 14: Wärmerohr
- 15: Arbeitsfluid
- 16: Verdampfer
- 18: Kondensator
- 20: Fluidtransportabschnitt
- 22: elektrische Isolierstrecke
- 24: Isolationskörper
- 26: elektrisch leitfähiges Element
- 28: Basisabschnitt
- 30: Feldsteuerungsabschnitt
- 32: äußere Mantelfläche
- 34: Feldsteuerungsabschnitt
- 40: Feldsteuerungskörper

- T: Transportrichtung

## Patentansprüche

1. Wärmerohr (14) zum Übertragen von Wärmeenergie entlang einer Transportrichtung (T) von einer Wärmequelle (10) zu einer Wärmesenke (12), insbesondere zum Kühlen von auf Hochspannung liegenden, stromtragenden elektrischen Bauteilen, mit
einem Verdampfer (16) zum Verdampfen eines in dem Wärmerohr (14) enthaltenen Arbeitsfluids (15),
einem Kondensator (18) zum Kondensieren des verdampften Arbeitsfluids (15), und
einem Fluidtransportabschnitt (20), welcher den Verdampfer (16) unter Ausbildung einer elektrischen Isolierstrecke (22) mit dem Kondensator (18) verbindet,
**dadurch gekennzeichnet, dass**
der Fluidtransportabschnitt (20) zur Ausbildung der elektrischen Isolierstrecke (22) wenigstens zwei elektrische Isolationskörper (24) umfasst, welche in Bezug auf die Transportrichtung (T) hintereinander angeordnet und durch ein elektrisch leitfähiges Element (26) voneinander getrennt sind.

2. Wärmerohr nach Anspruch 1,
**dadurch gekennzeichnet, dass**
das elektrisch leitfähige Element (26) flexibel und/oder elastisch ist.

3. Wärmerohr nach Anspruch 1 oder 2,
**dadurch gekennzeichnet, dass**
das elektrisch leitfähige Element (26) einen Feldsteuerungsabschnitt (30) mit einer zur Homogenisierung eines in der elektrischen Isolierstrecke (22) auftretenden elektrischen Feldes angepassten Formgebung aufweist.

4. Wärmerohr nach Anspruch 3,
**dadurch gekennzeichnet, dass**
der Feldsteuerungsabschnitt (30) torusförmig ist und gegenüber einer äußeren Mantelfläche (32) der Isolationskörper (24) vorsteht.

5. Wärmerohr nach zumindest einem der vorstehenden Ansprüche,
**dadurch gekennzeichnet, dass**
das elektrisch leitfähige Element (26) einen hohlprofilartigen Querschnitt aufweist.

6. Wärmerohr nach zumindest einem der vorstehenden Ansprüche,
**dadurch gekennzeichnet, dass**
das elektrisch leitfähige Element (26) einen inneren, ringförmigen Basisabschnitt (28) aufweist, an den sich ein äußerer, torusförmiger Feldsteuerungsabschnitt (30) anschließt.

7. Wärmerohr nach zumindest einem der vorstehenden Ansprüche,
**dadurch gekennzeichnet, dass**
zur Feldsteuerung ein Isolierstoff (40) am Wärmerohr (14) vorgesehen ist, welcher mit die Isolationseigenschaften beeinflussenden Zusätzen, beispielsweise Metallen, Metalloxiden oder Mikrovaristoren, versehen ist.

8. Wärmerohr nach zumindest einem der vorstehenden Ansprüche,
**dadurch gekennzeichnet, dass**
mehrere Isolationskörper (24) und mehrere elektrisch leitfähige Elemente (26) abwechselnd hintereinander angeordnet sind.

9. Wärmerohr nach zumindest einem der vorstehenden Ansprüche,
**dadurch gekennzeichnet, dass**
der Verdampfer (16) und/oder der Kondensator (18) durch einen napfartigen Behälter aus elektrisch leitfähigem Material gebildet ist, wobei der Behälter einen Feldsteuerungsabschnitt (34) mit einer zur Homogenisierung eines in der elektrischen Isolierstrecke (22) auftretenden elektrischen Feldes angepassten Formgebung aufweist.

10. Leistungsschalter, insbesondere für ein Schaltfeld der Mittelspannungstechnik, mit einem stromführenden Innenleiter (10) und einem den Innenleiter gehäuseartig umgebenden Außenleiter (12),
**dadurch gekennzeichnet, dass**
zum Abführen von Wärme von dem Innenleiter (10) ein Wärmerohr (14) nach zumindest einem der vorstehenden Ansprüche vorgesehen ist, wobei der Verdampfer (16) des Wärmerohrs (14) in thermischem und elektrischem Kontakt mit dem Innenleiter (10) steht und der Kondensator (18) in thermischem und elektrischem Kontakt mit dem Außenleiter (12) steht.

11. Leistungsschalter nach Anspruch 10,
**dadurch gekennzeichnet, dass**
Isolationskörper (24) des Wärmerohres (14) eine im Vergleich zur Streukapazität von Innenleiter (10) zu Außenleiter (14) große Kapazität aufweisen.

## Claims

1. A heat pipe (14) for transferring thermal energy along a transport direction (T) from a heat source (10) to a heat sink (12), in particular for cooling current-carrying, electrical components with applied high voltage, comprising
an evaporator (16) for evaporating a working fluid (15) contained in the heat pipe (14);
a condenser (18) for condensing the evaporated working fluid (15); and
a fluid transport section (20) which connects the evaporator (16) to the condenser (18) while forming an electrical insulating path (22), **characterised in that**
the fluid transport section (20) comprises at least two electrical insulation bodies (24) for forming the electrical insulating path (22), said electrical insulation bodies being arranged after one another with respect to the transport direction (T) and being separated from one another by an electrically conductive element (26).

2. A heat pipe in accordance with claim 1,
**characterised in that**
the electrically conductive element (26) is flexible and/or elastic.

3. A heat pipe in accordance with claim 1 or claim 2,
**characterised in that**
the electrically conductive element (26) has a field control section (30) having a shape adapted to homogenise an electrical field arising in the electrical insulating path (22).

4. A heat pipe in accordance with claim 3,
**characterised in that**
the field control section (30) is toroidal and projects with respect to an outer jacket surface (32) of the insulation bodies (24).

5. A heat pipe in accordance with at least one of the preceding claims,
**characterised in that**
the electrically conductive element (26) has a cross-section of a hollow section kind.

6. A heat pipe in accordance with at least one of the preceding claims,
**characterised in that**
the electrically conductive element (26) has an inner, annular base section (28) which is adjoined by an outer, toroidal field control section (30).

7. A heat pipe in accordance with at least one of the preceding claims,
**characterised in that**
an insulating material (40) is provided at the heat pipe (14) for the field control, the insulating material being provided with additives influencing the insulation properties, for example with metals, metal oxides or microvaristors.

8. A heat pipe in accordance with at least one of the preceding claims,
**characterised in that**
a plurality of insulation bodies (24) and a plurality of electrically conductive elements (26) are arranged alternately after one another.

9. A heat pipe in accordance with at least one of the preceding claims,
**characterised in that**
the evaporator (16) and/or the condenser (18) is/are formed by a bowl-shaped container of electrically conductive material, with the container having a field control section (34) comprising a shape adapted to homogenise an electrical field arising in the electrical insulating path (22).

10. A circuit breaker, in particular for a switch bay of medium-voltage technology, comprising a current-carrying inner conductor (10) and an outer conductor (12) surrounding the inner conductor in the manner of a housing,
**characterised in that**
a heat pipe (14) in accordance with at least one of the preceding claims is provided for dissipating heat from the inner conductor (10), with the evaporator (16) of the heat pipe (14) being in thermal and electrical contact with the inner conductor (10) and the condenser (18) being in thermal and electrical contact with the outer conductor (12).

11. A circuit breaker in accordance with claim 10,
**characterised in that**
insulation bodies (24) of the heat pipe (14) have a large capacitance in comparison with the stray capacitance from the inner conductor (10) to the outer conductor (14).

## Revendications

1. Tube caloporteur (14) pour transférer de l'énergie thermique le long d'une direction de transport (T) depuis une source de chaleur (10) à un consommateur de chaleur (12), en particulier pour refroidir des composants électriques soumis à une haute tension et parcourus par un courant, comprenant
un évaporateur (16) pour faire évaporer un fluide de travail (15) contenu dans le tube de chauffage (14),
un condenseur (18) pour faire condenser le fluide de travail évaporé (15), et
un tronçon de transport de fluide (20) qui relie l'évaporateur (16) au condenseur (18) en réalisant un parcours d'isolation électrique (22),
**caractérisé en ce que**
le tronçon de transport de fluide (20) inclut, pour réaliser le parcours d'isolation électrique (22), au moins deux corps d'isolation électrique (24) qui sont agencés l'un derrière l'autre par référence à la direction de transport (T) et qui sont séparés l'un de l'autre par un élément électriquement conducteur (26).

2. Tube caloporteur selon la revendication 1,
**caractérisé en ce que** l'élément électriquement conducteur (26) est flexible et/ou élastique.

3. Tube caloporteur selon la revendication 1 ou 2,
**caractérisé en ce que** l'élément électriquement conducteur (26) comprend un tronçon de commande de champ (30) avec une configuration adaptée à l'homogénéisation d'un champ électrique qui apparaît dans le parcours d'isolation électrique (22).

4. Tube caloporteur selon la revendication 3,
**caractérisé en ce que** le tronçon de commande de champ (30) est de forme torique et dépasse par rapport à une surface enveloppe extérieure (32) du corps d'isolation (24).

5. Tube caloporteur selon l'une au moins des revendications précédentes,
**caractérisé en ce que** l'élément électriquement conducteur (26) présente une section transversale semblable à un profil creux.

6. Tube caloporteur selon l'une au moins des revendications précédentes,
**caractérisé en ce que** l'élément électriquement conducteur (26) comprend un tronçon de base intérieur (28) de forme annulaire, auquel se raccorde un tronçon de commande de champ (30) extérieur en forme de tore.

7. Tube caloporteur selon l'une au moins des revendications précédentes, **caractérisé en ce qu'**il est prévu pour la commande de champ un matériau isolant (40) sur le tube caloporteur (14), lequel est doté d'additifs influençant les propriétés d'isolation, par exemple des métaux, des oxydes métalliques ou des micro-varistors.

8. Tube caloporteur selon l'une au moins des revendications précédentes, **caractérisé en ce que** plusieurs corps d'isolation (24) et plusieurs éléments électriquement conducteurs (26) sont agencés en alternance les uns derrière les autres.

9. Tube caloporteur selon l'une au moins des revendications précédentes,
**caractérisé en ce que** l'évaporateur (16) et/ou le condenseur (18) est formée par un récipient semblable à un godet en matériau électriquement conducteur, que le récipient comprend un tronçon de commande de champ (34) avec une conformation adaptée à l'homogénéisation d'un champ électrique qui apparaît dans le parcours électriquement isolant (22).

10. Commutateur de puissance, en particulier pour un panneau de commutation pour installation en moyenne tension, comprenant un conducteur intérieur (10) traversé par un courant et un conducteur extérieur (12) entourant le conducteur intérieur à la manière d'un boîtier,
**caractérisé en ce que**
pour évacuer la chaleur depuis le conducteur intérieur (10), il est prévu un tube caloporteur (14) selon l'une au moins des revendications précédentes, de sorte que l'évaporateur (16) du tube caloporteur (14) est en contact thermique et électrique avec le conducteur intérieur (10) et le condenseur (18) est en contact thermique et électrique avec le conducteur extérieur (12).

11. Commutateur de puissance selon la revendication 10,
**caractérisé en ce que** les corps d'isolation (24) du tube caloporteur (14) ont une capacité importante par comparaison à la capacité parasite du conducteur intérieur (10) vers le conducteur extérieur (14).
